# EUROPEAN PATENT APPLICATION

(11) **EP 4 539 241 A1**
(43) Date of publication of application: **16.04.2025**
(21) Application number: 22945822.9
(22) Date of filing: 09.06.2022
(51) Int. Cl.: H01M 50/507, H01M 50/548, H01M 50/588, H01M 50/593

(54) **BATTERY MODULE**

(71) Applicant: AESC Japan Ltd., Kanagawa, 2520012 (JP)
(72) Inventor: MONNO Dai, Zama-shi, Kanagawa 252-0012 (JP); FU Yongliang, Zama-shi, Kanagawa 252-0012 (JP); IZAWA Takami, Zama-shi, Kanagawa 252-0012 (JP)
(74) Representative: Mathys & Squire
(86) International application number: PCT/JP2022/023276
(87) International publication number: WO 2023/238320

(57) **Abstract**

A battery module (1A) includes a battery cell (100), a positive electrode bus bar (230) electrically connected to the battery cell (100), and a housing body (30A) housing the battery cell (100) and the positive electrode bus bar (230). At least a portion of the housing body (30A) includes an exposure structure exposing at least a portion of a connection portion between the battery cell (100) and the positive electrode bus bar (230) toward a predetermined direction.

## Description

### TECHNICAL FIELD

The present invention relates to a battery module.

### BACKGROUND ART

In recent years, various battery modules including a battery cell such as a lithium-ion secondary battery cell have been developed. For example, as described in Patent Document 1 or 2, a battery module includes a housing body that houses a stack of a plurality of battery cells. The housing body includes a front plate, a rear plate, a right plate, a left plate, a lower plate, and an upper plate that respectively cover the housing body of the plurality of battery cells from a front direction, a rear direction, a right direction, a left direction, a lower direction plane, and an upper direction.

### RELATED DOCUMENT

### PATENT DOCUMENT

PATENT DOCUMENT 1: Japanese Patent Application Publication (Translation of PCT Application) No. 2018-518032
PATENT DOCUMENT 2: Specification of Chinese Utility Model Registration No. 207818677

### SUMMARY OF INVENTION

### TECHNICAL PROBLEM

A battery module may include a bus bar for electrically connecting a battery cell to an external device such as another battery module. In such a battery module, a battery cell and a bus bar may be bonded to each other by a bonding method such as laser welding while the battery cell and the bus bar are housed in a housing body. The use of such a bonding method, however, requires a work space for bonding the battery and the bus bar to each other to be provide in the housing body. This may relatively increase volume of the housing body. It may be therefore less likely to improve volumetric efficiency of the battery module.

One example of an object of the present invention is to improve volumetric efficiency of a battery module. Another object of the present invention is made clear from description of the present specification.

### SOLUTION TO PROBLEM

One aspect of the present invention is as follows.
[1] A battery module including:
   a battery cell;
   a bus bar electrically connected to the battery cell; and
   a housing body housing the battery cell and the bus bar, wherein
   at least a portion of the housing body includes an exposure structure exposing at least a portion of a connection portion between the battery cell and the bus bar toward a predetermined direction.
[2] The battery module according to [1], further including
   an insulating member covering the at least a portion of the connection portion.
[3] The battery module according to [2], wherein
   at least a portion of the insulating member is located between the at least a portion of the connection portion and the at least a portion of the housing body.
[4] The battery module according to [2] or [3], wherein
   the housing body is provided with the insulating member.
[5] The battery module according to any one of [1] to [4], further including
   a connection body connecting the at least a portion of the housing body and at least another portion of the housing body to each other.

### ADVANTAGEOUS EFFECTS OF INVENTION

The volumetric efficiency of the battery module can be improved according to the above aspect.

### BRIEF DESCRIPTION OF THE DRAWINGS

[Fig. 1] An explosive perspective view of a battery module according to embodiment 1.
[Fig. 2] An enlarged explosive perspective view of one portion of the battery module according to embodiment 1.
[Fig. 3] An explosive perspective view of a battery module according to embodiment 2.
[Fig. 4] An enlarged explosive perspective view of one portion of the battery module according to embodiment 2.

### DESCRIPTION OF EMBODIMENTS

Hereinafter, embodiments according to the present invention are described by using the drawings. In all drawings, a similar constituent element is indicated by a similar reference sign, and description thereof is omitted as necessary.

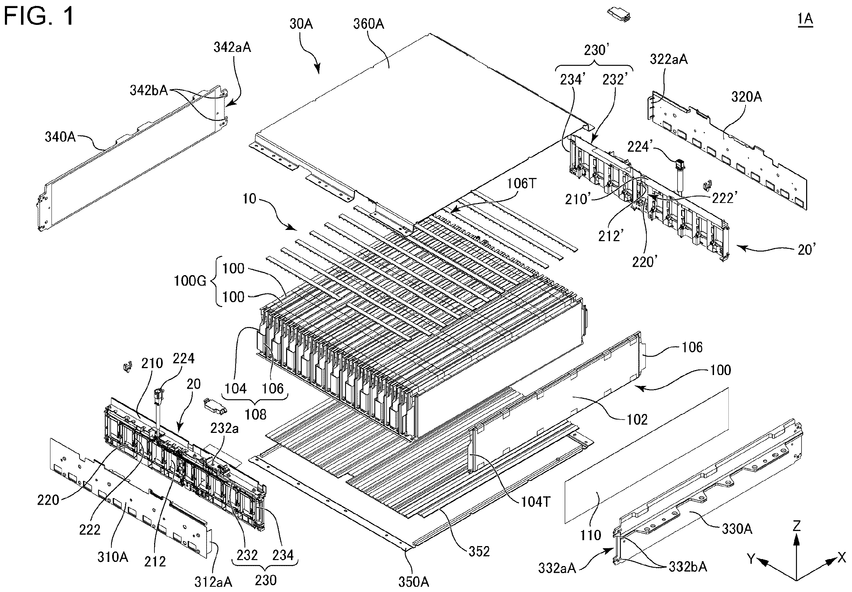

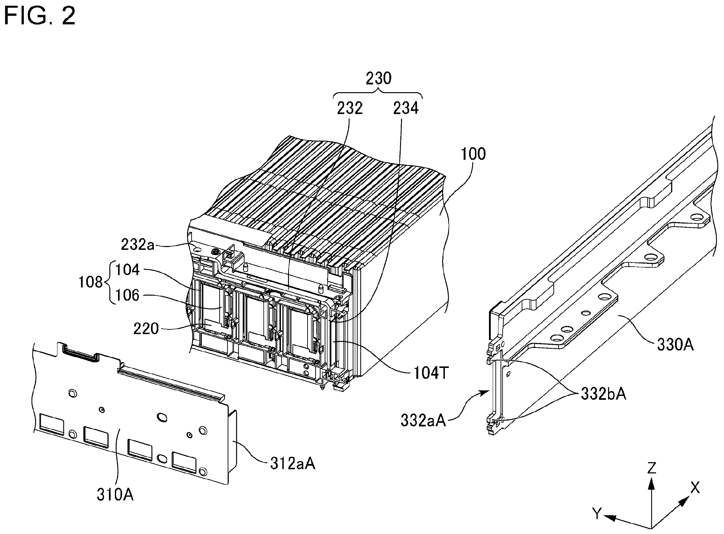

Fig. 1 is an explosive perspective view of a battery module 1A according to embodiment 1. Fig. 2 is an enlarged explosive perspective view of one portion of the battery module 1A according to embodiment 1.

In each drawing, arrows indicating an X direction, a Y direction, and a Z direction are illustrated for explanation. The X direction is a front-rear direction of the battery module 1A. Hereinafter, unless otherwise specifically noted, a leading end side of the arrow indicating the X direction is a rear side of the battery module 1A. Hereinafter, unless otherwise specifically noted, a base end side of the arrow indicating the X direction is a front side of the battery module 1A. The Y direction is orthogonal to the X direction. The Y direction is a left-right direction of the battery module 1A. Hereinafter, unless otherwise specifically noted, a leading end side of the arrow indicating the Y direction is a left side of the battery module 1A. Hereinafter, unless otherwise specifically noted, a base end side of the arrow indicating the Y direction is a right side of the battery module 1A. The Z direction is orthogonal to both of the X direction and the Y direction. The Z direction is an up-down direction of the battery module 1A. Hereinafter, unless otherwise specifically noted, a leading end side of the arrow indicating the Z direction is an upper side of the battery module 1A. Hereinafter, unless otherwise specifically noted, a base end side of the arrow indicating the Z direction is a lower side of the battery module 1A. Hereinafter, a direction perpendicular to the X direction is referred to as a YZ plane direction as necessary. Hereinafter, a direction perpendicular to the Y direction is referred to as a ZX plane direction as necessary. Hereinafter, a direction perpendicular to the Z direction is referred to as an XY plane direction as necessary. The relation between each of the X direction, the Y direction, the Z direction and each of the front-rear direction, the left-right direction, and the up-down direction of the battery module 1A is not limited to the above example.

The structure of the battery module 1A is described with reference to Figs. 1 and 2.

The battery module 1A includes a cell stack 10, a front voltage detection device 20, a rear voltage detection device 20', and a housing body 30A.

The cell stack 10 includes a plurality of battery cells 100 and a plurality of compression pads 110. The plurality of battery cells 100 and the plurality of compression pads 110 are alternately arranged in the Y direction. The compression pads 110 are disposed at opposite ends of each battery cell 100 in the Y direction. The plurality of battery cells 100 and the plurality of compression pads 110 are compressed in the Y direction by a right plate 330A and a left plate 340A to be described later. This can suppress displacement of the battery cell 100 in the ZX plane direction.

A longitudinal direction of each battery cell 100 is substantially in parallel to the X direction. A short direction of each battery cell 100 is substantially in parallel to the Z direction. A thickness direction of each battery cell 100 is substantially in parallel to the Y direction. The plurality of battery cells 100 is stacked in the Y direction. The shape of each battery cell 100 is not limited to this example.

Each battery cell 100 includes an unillustrated battery element, an exterior member 102, a positive electrode tab 104, and a negative electrode tab 106. The battery element includes a plurality of unillustrated positive electrodes and a plurality of unillustrated negative electrodes that are alternately stacked in the Y direction, and an unillustrated separator located between a positive electrode and a negative electrode adjacent to each other in the Y direction. The exterior member 102 seals the battery element and unillustrated electrolytic liquid. The positive electrode tab 104 is electrically connected to a positive electrode of the battery element. The positive electrode tab 104 is drawn out from one of opposite sides of the exterior member 102 in the X direction. The negative electrode tab 106 is electrically connected to a negative electrode of the battery element. The negative electrode tab 106 is drawn out from the other of the opposite sides of the exterior member 102 in the X direction. However, the structure of each battery cell 100 is not limited to this example.

In embodiment 1, a plurality of cell groups 100G is connected in series from a cell group 100G located at one end in the Y direction to a cell group 100G located at the other end in the Y direction. Each cell group 100G includes a plurality of battery cells 100 connected in parallel to each other. In embodiment 1, each cell group 100G includes two battery cells 100 adjacent to each other in the Y direction. The two positive electrode tabs 104 drawn out from two battery cells 100 included in each cell group 100G face the same side in the X direction. The two negative electrode tabs 106 drawn out from two battery cells 100 included in each cell group 100G face the same side in the X direction. The positive electrode tabs 104 and the negative electrode tab 106 drawn out from one of the cell groups 100G adjacent to each other in the Y direction and the positive electrode tabs 104 and the negative electrode tabs 106 drawn out from the other of the cell groups 100G adjacent to each other in the Y direction face a side opposite to each other in the X direction. The two cell groups 100G adjacent to each other in the Y direction include a tab group 108 located in front of or behind the two cell groups 100G. The tab group 108 includes the positive electrode tabs 104 and the negative electrode tabs 106 bonded to each other. The positive electrode tabs 104 and the negative electrode tabs 106 included in the tab group 108 are bonded to each other, for example, by laser welding. This results in alternate arrangement of a plurality of tab groups 108 located in front of the cell stack 10 and a plurality of tab groups 108 located behind the cell stack 10 in the Y direction.

In embodiment 1, there is a positive electrode tab 104 drawn out toward the front direction from the battery cell 100 located at the right end of the cell stack 10. Hereinafter, this positive electrode tab 104 is referred to as a terminal positive electrode tab 104T as necessary. There is a negative electrode tab 106 drawn out toward the rear direction from the battery cell 100 located at the left end of the cell stack 10. Hereinafter, this negative electrode tab 106 is referred to as a terminal negative electrode tab 106T as necessary.

The configuration of the cell stack 10 is not limited to the above example. For example, each cell group 100G may include three or more battery cells 100 connected in parallel to one another. Alternatively, a plurality of single battery cells 100 may be connected in series from the battery cell 100 located at one end in the Y direction to the battery cell 100 located at the other end in the Y direction. The position where the terminal positive electrode tab 104T and the terminal negative electrode tab 106T are disposed is not limited to the above example. The position of the terminal positive electrode tab 104T and the terminal negative electrode tab 106T change depending on the number of cell groups 100G. For example, both of the terminal positive electrode tab 104T and the terminal negative electrode tab 106T are disposed in front of or behind the cell stack 10 depending on the number of cell groups 100G.

The front voltage detection device 20 includes a front holder 210, a plurality of front voltage detection portions 220, a plurality of front voltage detection lines 222, a front connector 224, and a positive electrode bus bar 230.

The front holder 210 is disposed in front of the cell stack 10. The front holder 210 is provided with a plurality of front openings 212. Each of a plurality of tab groups 108 located in front of the cell stack 10 is exposed toward the front direction through each of the plurality of front openings 212. The front holder 210 integrally holds the plurality of front voltage detection portions 220 and the plurality of front voltage detection lines 222.

The plurality of front voltage detection portions 220 are attached to the front holder 210. Each of the plurality of front voltage detection portions 220 is bonded to the front surface of each of the plurality of tab groups 108 located in front of the cell stack 10, for example, by laser welding. The plurality of front voltage detection portions 220 are electrically connected to the front connector 224 via the plurality of front voltage detection lines 222. The plurality of front voltage detection lines 222 is routed via the front holder 210. In embodiment 1, installing the front holder 210 at an appropriate position with respect to the cell stack 10 enables each of the plurality of front voltage detection portions 220 to be disposed at an appropriate position with respect to each of the plurality of tab groups 108 located in front of the cell stack 10.

The positive electrode bus bar 230 is disposed at the right end portion of the front holder 210. The positive electrode bus bar 230 has a substantially L-shape. Specifically, the positive electrode bus bar 230 includes a front lateral conductor 232 and a front vertical conductor 234. The front lateral conductor 232 extends substantially in parallel to the Y-direction. The front vertical conductor 234 extends substantially in parallel to the Z direction downward from the right end portion of the front lateral conductor 232.

The front lateral conductor 232 functions as a terminal for electrically connecting to an external device such as another battery module. Specifically, a fastening hole 232a is provided on a left end portion of the front lateral conductor 232. An unillustrated fastening tool for fastening an unillustrated bus bar being electrically connected to an unillustrated external device such as another battery module is installable on the fastening hole 232a.

The front vertical conductor 234 is electrically connected to the terminal positive electrode tab 104T. The terminal positive electrode tab 104T is located to the right of the front vertical conductor 234. In embodiment 1, the terminal positive electrode tab 104T and the front vertical conductor 234 are bonded to each other by laser welding. However, a bonding method of the terminal positive electrode tab 104T and the front vertical conductor 234 is not limited to laser welding.

The rear voltage detection device 20' is similar to the front voltage detection device 20 except for the following point. The rear voltage detection device 20' includes a rear holder 210', a plurality of rear voltage detection portions 220', a plurality of rear voltage detection lines 222', a rear connector 224', and a negative electrode bus bar 230'.

The rear holder 210' is disposed behind the cell stack 210. The rear holder 210' is provided with a plurality of rear openings 212. Each of a plurality of tab groups 108 located behind the cell stack 10 is exposed toward the rear direction through each of the plurality of rear openings 212'. The rear holder 210' integrally holds the plurality of rear voltage detection portions 220' and the plurality of rear voltage detection lines 222'.

The plurality of rear voltage detection portions 220' are attached to the rear holder 210'. Each of the plurality of rear voltage detection portions 220' is bonded to the rear surface of each of the plurality of tab groups 108 located behind the cell stack 10, for example, by laser welding. The plurality of rear voltage detection portions 220' are electrically connected to the rear connector 224' via the plurality of rear voltage detection lines 222'. The plurality of rear voltage detection lines 222' is routed via the rear holder 210'. In embodiment 1, installing the rear holder 210' at an appropriate position with respect to the cell stack 10 enables each of the plurality of rear voltage detection portions 220' to be disposed at an appropriate position with respect to each of the plurality of tab groups 108 located behind the cell stack 10.

The negative electrode bus bar 230' is disposed at the left end portion of the rear holder 210'. The negative electrode bus bar 230' has a substantially L-shape. The negative electrode bus bar 230' includes a rear vertical conductor 232' and a rear vertical conductor 234'. The rear vertical conductor 232' extends substantially in parallel to the Y-direction. The rear vertical conductor 234' extends substantially in parallel to the Z direction downward from the left end portion of the rear vertical conductor 232'.

The rear vertical conductor 232' functions as a terminal for electrically connecting to an external device such as another battery module.

The rear vertical conductor 234' is electrically connected to the terminal negative electrode tab 106T. The terminal negative electrode tab 106T is located to the left of the rear vertical conductor 234'. In embodiment 1, the terminal negative electrode tab 106T and the rear vertical conductor 234' are bonded to each other by laser welding. However, a bonding method of the terminal negative electrode tab 106T and the rear vertical conductor 234' is not limited to laser welding.

The housing body 30A includes a front plate 310A, a rear plate 320A, the right plate 330A, the left plate 340A, a lower plate 350A, and an upper plate 360A.

The front plate 310A covers the cell stack 10 and the front voltage detection device 20 from the front direction. The front plate 310A is formed of an insulating material such as resin. The right end portion of the front plate 310A is provided with a front protrusion insulating member 312aA. The front protrusion insulating member 312aA protrudes rearward from the right end portion of the front plate 310A.

The rear plate 320A covers the cell stack 10 and the rear voltage detection device 20' from the rear direction. The rear plate 320A is formed of an insulating material such as resin. The left end portion of the rear plate 320A is provided with a rear protrusion insulating member 322aA. The rear protrusion insulating member 322aA protrudes forward from the left end portion of the rear plate 320A.

The right plate 330A covers the cell stack 10, the front voltage detection device 20 and the rear voltage detection device 20' from the right direction. The right plate 330A is formed of metal such as aluminum. The front edge of the right plate 330A is provided with a front cutout 332aA. The front cutout 332aA is opened forward. A pair of front protrusions 332bA are formed on opposite sides of the front cutout 332aA of the front edge of the right plate 330A in the Z direction. The pair of front protrusions 332bA protrude forward. The pair of front protrusions 332bA are engageable with the right end portion of the front plate 310A.

The left plate 340A covers the cell stack 10, the front voltage detection device 20 and the rear voltage detection device 20' from the left direction. The left plate 340A is formed of metal such as aluminum. The rear edge of the left plate 340A is provided with a rear cutout 342aA. The rear cutout 342aA is opened rearward. A pair of rear protrusions 342bA are formed on opposite sides of the rear cutout 342aA of the rear edge of the left plate 340A in the Z direction. The pair of rear protrusions 342bA protrude rearward. The pair of rear protrusions 342bA are engageable with the left end portion of the rear plate 320A.

The lower plate 350A covers the cell stack 10, the front voltage detection device 20 and the rear voltage detection device 20' from the lower direction. The lower plate 350A is formed of metal such as aluminum. A thermally conductive adhesive 352 is disposed between the upper surface of the lower plate 350A and the lower end of the cell stack 10. The heat generated from the cell stack 10 can be therefore released downward of the battery module 1A through the thermally conductive adhesive 352.

The upper plate 360A covers the cell stack 10, the front voltage detection device 20 and the rear voltage detection device 20' from the upper direction. The upper plate 360A is formed of metal such as aluminum.

Next, one example of a method of assembling the battery module 1A according to embodiment 1 is described with reference to Figs. 1 and 2. In this example, the battery module 1A is assembled as follows.

First, the cell stack 10 is manufactured. The cell stack 10 includes the plurality of battery cells 100 and the plurality of compression pads 110.

Then, the cell stack 10 is held by applying pressure to the cell stack 10 in the Y direction by the right plate 330A and the left plate 340A.

Then, the front voltage detection device 20 is disposed in front of the cell stack 10, thereby to dispose each of the plurality of front voltage detection portions 220 in front of each of the plurality of tab groups 108 located in front of the cell stack 10. The terminal positive electrode tab 106T is disposed to the right of the front vertical conductor 234.

Then, each of the plurality of tab groups 108 located in front of the cell stack 10 and each of the plurality of front voltage detection portions 220 are bonded to each other by laser welding. The terminal positive electrode tab 104T and the front vertical conductor 234 are bonded to each other by laser welding, thereby to form a connection portion between the terminal positive electrode tab 104T and the front vertical conductor 234. The bonding method of each tab group 108 and each front voltage detection portion 220 is not limited to laser welding. The bonding method of the terminal positive electrode tab 104T and the front vertical conductor 234 is not limited to laser welding.

In embodiment 1, the connection portion between the terminal positive electrode tab 104T and the front vertical conductor 234 is exposed in the right direction via the front cutout 332aA of the right plate 330A while the front voltage detection device 20 is disposed in front of the cell stack 10 and the right plate 330A is disposed to the right of the cell stack 10 and the front voltage detection device 20. Specifically, the front cutout 332aA has an exposure structure exposing at least a portion of the connection portion toward the right direction. The laser can be therefore radiated to the connection portion from the right direction via the front cutout 332aA of the right plate 330A. I embodiment 1, therefore, even if the cell stack 10 and the right plate 330A are close to each other in the Y direction, the work space for bonding the terminal positive electrode tab 104T and the front vertical conductor 234 to each other can be secured with ease compared to case of the connection portion covered by the right plate 330A. Thus, in embodiment 1, the volume of the housing body 30A can be reduced compared to the case above described. In embodiment 1, therefore, the volumetric efficiency of the battery module 1A can be improved compared to the case above described.

The exposure structure exposing at least a portion of the connection portion between the terminal positive electrode tab 104T and the front vertical conductor 234 toward the right direction is not limited to the front cutout 332aA. For example, a hole through which the connection portion is exposed may be provided on the front end portion of the right plate 330A in place of the front cutout 332aA. Alternatively, the entirety of the front end portion of the right plate 330A may be located behind the connection portion.

Then, the rear voltage detection device 20' is disposed behind the cell stack 10, thereby dispose each of the plurality of rear voltage detection portions 220' behind each of the plurality of tab groups 108 located behind the cell stack 10. The terminal negative electrode tab 106T is disposed to the left of the rear vertical conductor 234'.

Then, each of the plurality of tab groups 108 located behind the cell stack 10 and each of the plurality of rear voltage detection portions 220' are bonded to each other by laser welding. The terminal negative electrode tab 106T and the rear vertical conductor 234' are bonded to each other by laser welding, thereby to form a connection portion between the terminal negative electrode tab 106T and the rear vertical conductor 234'. The bonding method of each tab group 108 and each rear voltage detection portion 220' is not limited to laser welding. The bonding method of the terminal negative electrode tab 106T and the rear vertical conductor 234' is not limited to laser welding.

In embodiment 1, the connection portion between the terminal negative electrode tab 106T and the rear vertical conductor 234' is exposed in the left direction via the rear cutout 342aA of the left plate 340A while the rear voltage detection device 20' is disposed behind the cell stack 10 and the left plate 340A is disposed to the left of the cell stack 10 and the rear voltage detection device 20'. Specifically, the rear cutout 342aA has an exposure structure exposing at least a portion of the connection portion toward the left direction. The laser can be therefore radiated to the connection portion from the left direction via the rear cutout 342aA of the left plate 340A. In embodiment 1, therefore, even if the cell stack 10 and the left plate 340A are close to each other in the Y direction, the work space for bonding the terminal negative electrode tab 106T and the rear vertical conductor 234' can be secured with ease compared to case of the connection portion covered by the left plate 340A. Thus, in embodiment 1, the volume of the housing body 30A can be reduced compared to the case above described. In embodiment 1, therefore, the volumetric efficiency of the battery module 1A can be improved compared to the case above described.

The exposure structure exposing at least a portion of the connection portion between the terminal negative electrode tab 106T and the rear vertical conductor 234' toward the left direction is not limited to the rear cutout 342aA.

Then, the front plate 310A is disposed in front of the cell stack 10 and the front voltage detection device 20. In this step, the right end portion of the front plate 310A and the pair of front protrusions 332bA of the front end portion of the right plate 330A may be engaged with each other. In embodiment 1, the front protrusion insulating member 312aA covers at least a portion of the connection portion between the terminal positive electrode tab 104T and the front vertical conductor 234 from the right direction while the front plate 310A is disposed in front of the cell stack 10 and the front voltage detection device 20, and the right plate 330A is disposed to the right of the cell stack 10 and the front voltage detection device 20. In this state, at least a portion of the front protrusion insulating member 312aA is located between the connection portion between the terminal positive electrode tab 104T and the front vertical conductor 234 and the peripheral portion of the front cutout 332aA of the right plate 330A. The insulating member 312aA can therefore suppress contact and short circuit of the terminal positive electrode tab 104T and the right plate 330A. In embodiment 1, at least a portion of the front protrusion insulating member 312aA is located to the left of the front cutout 332aA in the state above described. The front cutout 332aA can be therefore blocked by the front protrusion insulating member 312aA when viewed from the right side. In embodiment 1, the front protrusion insulating member 312aA is provided on the front plate 310A. Accordingly, disposing the front plate 310A at an appropriate position enables the front protrusion insulating member 312aA to be disposed at an appropriate position. However, the front protrusion insulating member 312aA may be an independent member from the front plate 310A.

Then, the rear plate 320A is disposed behind the cell stack 10 and the rear voltage detection device 20'. In this step, the left end portion of the rear plate 320A and the pair of rear protrusions 342bA of a rear end portion of the left plate 340A may be engaged with each other. In embodiment 1, the rear protrusion insulating member 322aA covers at least a portion of the connection portion between the terminal negative electrode tab 106T and the rear vertical conductor 234' from the left direction while the rear plate 320A is disposed behind the cell stack 10 and the rear voltage detection device 20', and the left plate 340A is disposed to the left of the cell stack 10 and the rear voltage detection device 20' . In this state, at least a portion of the rear protrusion insulating member 322aA is located between the connection portion between the terminal negative electrode tab 106T and the rear vertical conductor 234' and the peripheral portion of the rear cutout 342aA of the left plate 340A. The rear protrusion insulating member 322aA can therefore suppress contact and short circuit of the terminal negative electrode tab 106T and the left plate 340A. In embodiment 1, at least a portion of the rear protrusion insulating member 332aA is located to the right of the rear cutout 342aA in the state above described. The rear cutout 342aA can be therefore blocked by the rear protrusion insulating member 322aA when viewed from the left side. In embodiment 1, the rear protrusion insulating member 322aA is provided on the rear plate 320A. Accordingly, disposing the rear plate 320A at an appropriate position enables the rear protrusion insulating member 322aA to be disposed at an appropriate position. However, the rear protrusion insulating member 322aA may be an independent member from the rear plate 320A.

Then, the lower plate 350A and the upper plate 360A are disposed respectively below and above the cell stack 10. Then, the lower plate 350A and the upper plate 360A are bonded to the front plate 310A, the rear plate 320A, the right plate 330A, and the left plate 340A.

Thus, the battery module 1A according to embodiment 1 is manufactured.

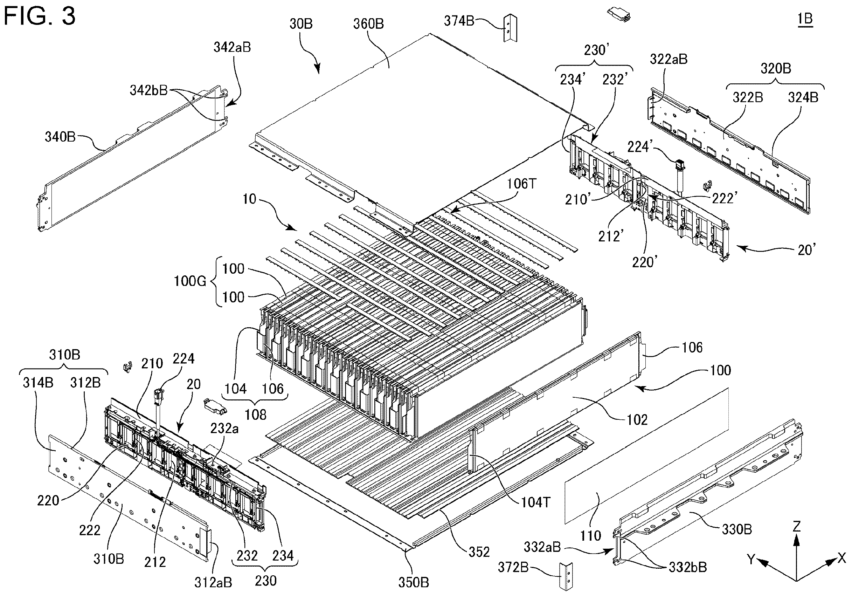

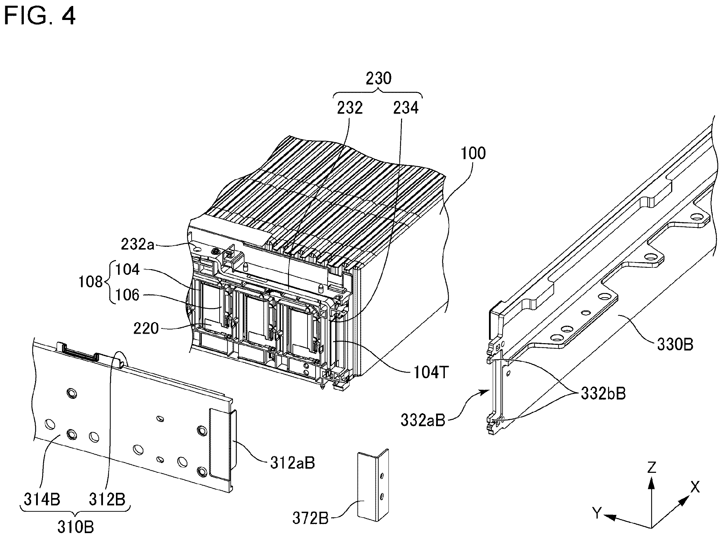

Fig. 3 is an explosive perspective view of a battery module 1B according to embodiment 2. Fig. 4 is an enlarged explosive perspective view of one portion of the battery module 1B according to embodiment 2. The battery module 1B according to embodiment 2 is similar to the battery module 1A according to embodiment 1 except for the following point.

A housing body 30B of the battery module 1B according to embodiment 2 includes a front plate 310B, a rear plate 320B, a right plate 330B, a left plate 340B, a lower plate 350B, and an upper plate 360B.

The front plate 310B includes a front insulating plate 312B and a front metal plate 314B. The front insulating plate 312B and the front metal plate 314B overlap each other in the X direction. The right end portion of the front insulating plate 312B is provided with a front protrusion insulating member 312aB. The front metal plate 314B is disposed in front of the front insulating plate 312B. The strength of the front plate 310B can be improved when the front plate 310B includes both of the front insulating plate 312B and the front metal plate 314B compared to when the front plate 310B does not include the front metal plate 314B.

The rear plate 320B includes a rear insulating plate 322B and a rear metal plate 324B. The rear insulating plate 322B and the rear metal plate 324B overlap each other in the X direction. The left end portion of the rear insulating plate 322B is provided with a rear protrusion insulating member 322aB. The rear metal plate 324B is disposed behind the rear insulating plate 322B. The strength of the rear plate 320B can be improved when the rear plate 320B includes both of the rear insulating plate 322B and the rear metal plate 324B compared to when the rear plate 320B does not include the rear metal plate 324B.

The front edge of the right plate 330B is provided with a front cutout 332aB and a pair of front protrusions 332bB. Similarly to embodiment 1, at least a portion of the connection portion between the terminal positive electrode tab 104T and the front vertical conductor 234 can be therefore exposed toward the right direction via the front cutout 332aB. Similarly to embodiment 1, the front protrusion insulating member 312aB can cover at least a portion of the connection portion between the terminal positive electrode tab 104T and the front vertical conductor 234 from the right direction. At least a portion of the front protrusion insulating member 312aB can be disposed between the connection portion between the terminal positive electrode tab 104T and the front vertical conductor 234 and the peripheral portion of the front cutout 332aB of the right plate 330B.

The rear edge of the left plate 340B is provided with a rear cutout 342aB and a pair of rear protrusions 342bB. Similarly to embodiment 1, at least a portion of the connection portion between the terminal negative electrode tab 106T and the rear vertical conductor 234' can be therefore exposed toward the left direction via the rear cutout 342aB. Similarly to embodiment 1, the rear protrusion insulating member 322aB can cover at least a portion of the connection portion between the terminal negative electrode tab 106T and the rear vertical conductor 234' from the left direction. At least a portion of the rear protrusion insulating member 322aB can be disposed between the connection portion between the terminal negative electrode tab 106T and the rear vertical conductor 234' and the peripheral portion of the rear cutout 342aB of the left plate 340B.

The housing body 30B according to embodiment 2 further includes a front bracket 372B and a rear bracket 374B.

The front bracket 372B is disposed at the corner portion of the housing body 30B between the right end portion of the front plate 310B and the front end portion of the right plate 330B. The front bracket 372B has a substantially L-shape when viewed from the Z direction. Specifically, the front bracket 372B includes a portion extending substantially in parallel to the Y direction and a portion extending substantially in parallel to the X direction when viewed from the Z direction. The portion of the front bracket 372B extending substantially in parallel to the Y direction is bonded to the right end portion of the front metal plate 314B, for example, by welding. The portion of the front bracket 372B extending substantially in parallel to the X direction is bonded to the front end portion of the right plate 330B, for example, by welding. Thus, the front bracket 372B becomes a connection body connecting the front plate 310B and the right plate 330B to each other. The strength of the housing body 30B can be improved by the front bracket 372B. The front cutout 332aB can be blocked by the front bracket 372B. The resonance of the housing body 30B can be suppressed by the front bracket 372B.

The rear bracket 374B is disposed at the corner portion of the housing body 30B between the left end portion of the rear plate 320B and the rear end portion of the left plate 340B. The rear bracket 374B has a substantially L-shape when viewed from the Z direction. Specifically, the rear bracket 374B includes a portion extending substantially in parallel to the Y direction and a portion extending substantially in parallel to the X direction when viewed from the Z direction. The portion of the rear bracket 374B extending substantially in parallel to the Y direction is bonded to the left end portion of the rear metal plate 324B, for example, by welding. The portion of the rear bracket 374B extending substantially in parallel to the X direction is bonded to the rear end portion of the left plate 340B, for example, by welding. Thus, the rear bracket 374B becomes a connection connecting the rear plate 320B and the left plate 340B to each other. The strength of the housing body 30B can be improved by the rear bracket 374B. The rear cutout 342aB can be blocked by the rear bracket 374B. The resonance of the housing body 30B can be suppressed by the rear bracket 374B.

In the foregoing, embodiments according to the present invention have been described with reference to the drawings; however, these are examples of the present invention, and various configurations other than the above can also be adopted.

### REFERENCE SIGNS LIST

1A, 1B Battery module
10 Cell stack
20 Front voltage detection device
30A, 30B Housing body
100 Battery cell
100G Cell group
102 Exterior member
104 Positive electrode tab
104T Terminal positive electrode tab
106 Negative electrode tab
106T Terminal negative electrode tab
108 Tab group
110 Compression pad
210 Front holder
210' Rear holder
212 Front opening
212' Rear opening
220 Front voltage detection portion
220' Rear voltage detection portion
222 Front voltage detection line
222' Rear voltage detection line
224 Front connector
224' Rear connector
230 Positive electrode bus bar
230' Negative electrode bus bar
232 Front lateral conductor
232' Rear vertical conductor
232a Fastening hole
234 Front vertical conductor
234' Rear vertical conductor
310A, 310B Front plate
312B Front insulating plate
312aA, 312aB Front protrusion insulating member
314B Front metal plate
320A, 320B Rear plate
322B Rear insulating plate
322aA, 322aB Rear protrusion insulating member
324B Rear metal plate
330A, 330B Right plate
332aA, 332aB Front cutout
332bA, 332bB Front protrusion
340A, 340B Left plate
342aA, 342aB Rear cutout
342bA, 342bB Rear protrusion
350A, 350B Lower plate
352 Thermally conductive adhesive
360A, 360B Upper plate
372B Front bracket
374B Rear bracket

## Claims

1. A battery module comprising:
a battery cell;
a bus bar electrically connected to the battery cell; and
a housing body housing the battery cell and the bus bar, wherein
at least a portion of the housing body includes an exposure structure exposing at least a portion of a connection portion between the battery cell and the bus bar toward a predetermined direction.

2. The battery module according to claim 1, further comprising
an insulating member covering the at least a portion of the connection portion.

3. The battery module according to claim 2, wherein
at least a portion of the insulating member is located between the at least a portion of the connection portion and the at least a portion of the housing body.

4. The battery module according to claim 2 or 3, wherein
the housing body is provided with the insulating member.

5. The battery module according to any one of claims 1 to 4, further comprising
a connection body connecting the at least a portion of the housing body and at least another portion of the housing body to each other.
